# EUROPÄISCHE PATENTSCHRIFT

(11) **EP 3 705 164 B1**
(45) Veröffentlichungstag und Bekanntmachung des Hinweises auf die Patenterteilung: **29.06.2022**
(21) Anmeldenummer: 20000074.3
(22) Anmeldetag: 20.02.2020
(51) Int. Cl.: B01D 25/12, B01D 35/143, G01F 1/28, G01M 3/26

(54) **LECKAGEMELDER FÜR FILTERELEMENTE**
LEAKAGE DETECTOR FOR FILTER ELEMENTS
DÉTECTEUR DE FUITES POUR ÉLÉMENTS FILTRANTS

(30) Priorität: 02.03.2019 DE 202019001141 U
(43) Veröffentlichungstag der Anmeldung: 09.09.2020
(73) Patentinhaber: LENSER Filtration GmbH, 89250 Senden (DE)
(72) Erfinder: Dursch, Michael, 89143 Blausbeuren (DE); Wildner, Gerhard, 89278 Nersingen (DE)
(74) Vertreter: Hering, Hartmut

(56) Entgegenhaltungen:
- EP-A2- 1 018 355
- DE-U1- 29 916 427
- DE-U1-202018 104 129

## Beschreibung

Die Erfindung betrifft einen Leckagemelder für Filterelemente einer Filterpresse, die mehrere randseitig zusammengespannte, aus einer Stützwand mit einem umlaufenden Plattenrahmen bestehende Filterelemente umfasst, die zwischen sich Filterkammern mit darin mündenden Einläufen für die zu filtrierende Suspension bilden und ein- oder beidseitig im Randbereich dicht mit dem Filterelement verbundene, durch ein Druckmittel in die Filterkammer vorbewegbare Preßmembranen tragen, wobei das Druckmittel über eine randseitig in dem Filterelement mündende Druckmittelbohrung zu- bzw. abgeführt wird, in die ein vom Druckmittel durchflossener Strömungssensor einsetzbar ist.

Ein derartiger Leckagemelder ist beispielsweise aus der EP 1084742 bekannt geworden, der sich in der Praxis bewährt hat und entsprechend vielfältig eingesetzt wird. Bei Verschmutzungen im Nachpresssystem können jedoch Störungen auftreten, die einen Ausbau und eine Reinigung erforderlich machen. Daher liegt der Erfindung die Aufgabe zugrunde, eine Leckagemelder der eingangs genannten Art hinsichtlich seiner Aufbaugeometrie dahingehend zu verbessern, dass er insgesamt unempfindlicher gegen Schmutz wird, insbesondere Schmutzablagerungen sich kaum absetzen können.

Auch DE 299 16 427 U und EP 1 018 355 A gehören zum Stand der Technik.

Diese Aufgabe wird nach der Erfindung dadurch gelöst, dass der Strömungssensor einen im Querschnitt im wesentlichen zylindrischen, axial verschiebbaren Staukörper aufweist, der an seiner Mantelfläche mit wenigstens einem, bevorzugt zwei oder vielfachen hiervon sich in axialer Richtung erstreckenden Strömungskanälen versehen ist, wobei der Staukörper einen Magneten aufweist, über dessen Magnetfeld die Position des Staukörpers durch einen ebenfalls im Randbereich bzw. im Plattenrahmen angeordneten Magnetsensor erfasst und als Signal zur Weiterverarbeitung bereitgestellt wird.

Der durch die Erfindung erreichte Vorteil besteht zunächst im Wesentlichen darin, dass die Geometrie des Staukörpers sehr umempfindlich gegen Schmutz im Nachpresssystem ist, wobei mit Schmutz im Nachpresssystem insbesondere aufgrund von Plattendefekten oder unsauberer Umgebung regelmäßig gerechnet werden muss. Sollte dennoch aufgrund starker Verschmutzung eine Reinigung erforderlich werden, so ist dies aufgrund des einfachen Aufbaus schnell und ohne Mühe möglich. Selbst bei festsitzendem Staukörper aufgrund von Verschmutzung ist der Betrieb der Filterplatte nach wie vor möglich, da selbst ein festsitzender Staukörper in beiden Flussrichtungen überströmt werden kann. Desweiteren kann die Staukörpergeometrie bei problematischen Anwendungen auf einfache Weise optimiert werden, da der Staukörper ohne Weiteres leicht ausgetauscht werden kann. Dadurch kann eine Variation der Querschnittsgröße und der Geometrie vorgenommen werden, wodurch auch eine Anpassung an unterschiedliche Medien möglich ist.

In bevorzugter Ausführungsform der Erfindung ist der Strömungssensor mit einem Gewindeflansch in der Druckmittelbohrung eingeschraubt. Hierdurch ist es insbesondere auch möglich, Filterplatten nachträglich nachzurüsten, in dem lediglich die Druckmittelbohrung auf den geeigneten Druckmesser aufgebohrt und mit einem Gewinde versehen wird.

Weiter hat es sich im Rahmen der Erfindung als vorteilhaft erwiesen, wenn der Staukörper in einer an dem Gewindeflansch anschließenden Hülse geführt ist, wobei die Hülse entweder innerhalb oder außerhalb des Plattenrahmens angeordnet ist. Sofern im Plattenrahmen ausreichend Platz vorhanden ist, kann die Hülse und damit der Staukörper innerhalb des Plattenrahmens angeordnet sein; ist der Plattenrahmen dagegen schmal, besteht ohne Weiteres die Möglichkeit, die Hülse außerhalb des Rahmens vorzusehen.

Es besteht jedoch auch die ebenfalls vorteilhafte, insbesondere einfach gestaltete Möglichkeit, dass der Staukörper in der Druckmittelbohrung geführt ist und in Ruhelage der Stirnfläche des Gewindeflansches anliegt. Hierdurch gestaltet sich der Gewindeflansch besonders einfach.

Weiter ist im Rahmen der Erfindung vorgesehen, dass der Staukörper mittels einer in der Hülse oder der Druckmittelbohrung geführten Schraubenfeder in der Ruhelage gehalten ist, wobei die Schraubenfeder sich auf der dem Staukörper abgewandten Seite an einer Ringschulter der Hülse oder der Druckmittelbohrung abstützt. Durch diesen Aufbau ist es auf einfache Weise möglich, die Schraubenfeder hinsichtlich ihres Elastizitätsmoduls auf die Druckverhältnisse im Nachpresssystem anzupassen. Grundsätzlich kann bei entsprechender Gestaltung des Staukörpers auch über das Eigengewicht durch die Schwerkraft in seiner Ruhelage gehalten werden.

Der Staukörper ist in vorteilhafter Ausgestaltung der Erfindung an beiden Stirnseiten mit einer flachen Sacklochbohrung versehen, die jeweils zu den einzelnen Strömungskanälen hin offen ist.

Die Strömungskanäle können hinsichtlich ihrer Querschnittsgestalt im Grunde beliebig ausgebildet sein; im Rahmen der Erfindung hat es sich jedoch als zweckmäßig erwiesen, wenn die Strömungskanäle eine kreisförmige Randkontur aufweisen, da hierdurch Ablagerungen von Schmutz aus dem Nachpresssystem im Bereich des Staukörpers weitestgehend vermieden werden.

Um Verkantungen oder ein Verklemmen des Staukörpers während des Bewegungshubes zu vermeiden, kann vorgesehen sein, dass der Staukörper an seinen stirnseitigen Rändern mit einer Verrundung oder einer Fase versehen ist.

Der Magnetsensor kann im einzelnen als digital arbeitendes Schaltelement oder als analog arbeitender linearer Sensor ausgebildet sein. Wird lediglich ein digitales Schaltsignal erfasst, so kann aus der Schaltdauer der Füllstand abgeleitet werden. Bei Auswertung eines analogen, gegebenenfalls digitalisiertem Signal läßt sich die Strömungsgeschwindigkeit und unter Berücksichtigung der Zeitkomponenete auch die Füllmenge ermitteln.

Im Folgenden wird die Erfindung an einem in der Zeichnung dargestellten Ausführungsbeispiel näher erläutert; es zeigen:
- Fig. 1: einen nur teilweise wiedergegebenen Plattenrahmen mit einem in die Druckmittelbohrung eingesetzten Strömungssensor sowie einem Magnetsensor,

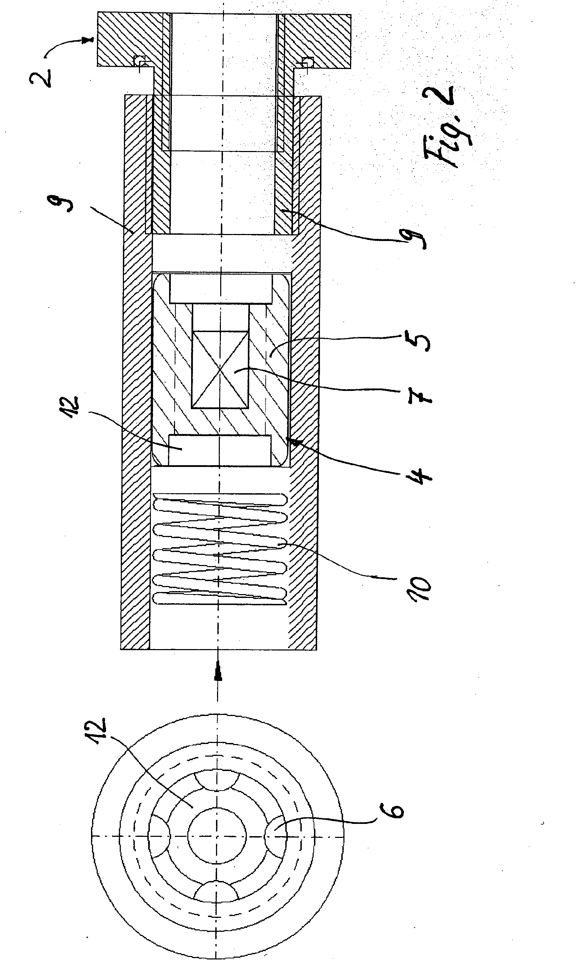

- Fig. 2: eine alternative Ausführungsform des Gegenstands nach Figur 1,
- Fig. 3: eine Detaildarstellung des Staukörpers,
- Fig. 4: eine weitere alternative Gestaltung, bei welcher die einzelnen Leckagemelder über einen Sammelnachpressanschluß miteinander verbunden sind.

Der in der Zeichnung wiedergegebene Leckagemelder 2 ist vorgesehen für Filterelemente einer Filterpresse, die mehrere randseitig zusammengespannte Filterelemente umfasst, die aus einer Stützwand mit einem umlaufenden Plattenrahmen 1 bestehen. Die Filterelemente bilden zwischen sich Filterkammern mit darin mündenden Einläufen für die zu filtrierende Suspension. Weiter tragen die Filterelemente ein- oder beidseitig im Randbereich dicht mit dem Filterelement verbundene, durch ein Druckmittel in die Filterkammer vorbewegbare Pressmembranen. Das Druckmittel wird dabei über eine randseitig in das Filterelement mündende Druckmittelbohrung 3 zu- bzw. abgeführt. Um diesen Zu- bzw. Abfluss kontrollieren zu können, ist in der Druckmittelbohrung ein vom Druckmittel durchflossener Strömungssensor 4 vorgesehen.

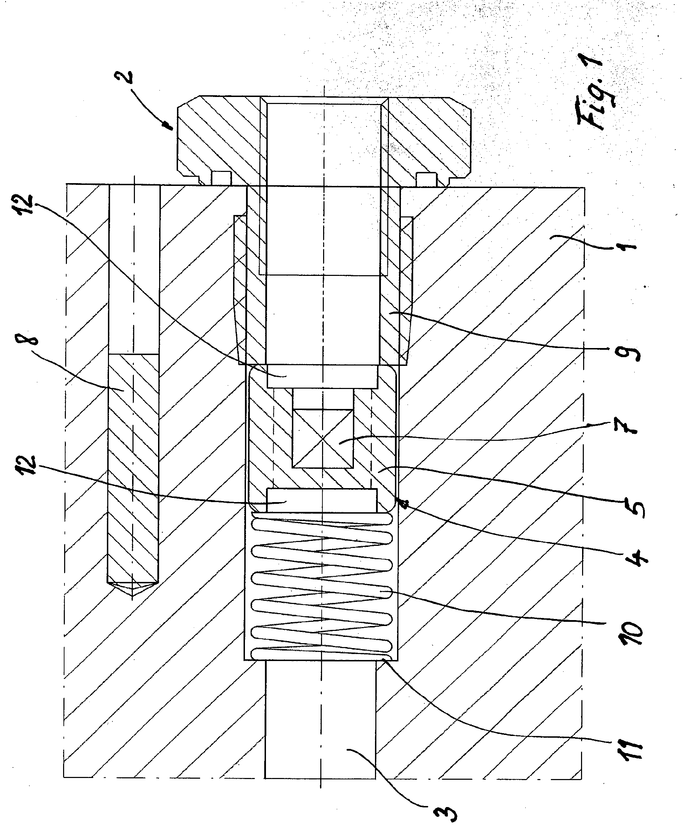

Wie sich insbesondere aus der Figur 1 ergibt, weist der Strömungssensor 4 einen im Querschnitt im Wesentlichen zylindrischen, axial verschiebbaren Staukörper 5 auf, der an seiner Mantelfläche mit sich in axialer Richtung erstreckenden Strömungskanälen 6 versehen ist. Um ein gleichmäßiges Strömungsverhalten zu erreichen, sind an der Mantelfläche zwei bzw. bevorzugt vier Strömungskanäle 6 angeordnet.

Weiter weist der Staukörper 5 einen Magneten 7 auf, über dessen Magnetfeld die Position des Staukörpers 5 erfasst werden kann. Hierzu ist ebenfalls im Randbereich bzw. im Plattenrahmen 1 ein Magnetsensor 8 angeordnet, der ein Signal zur elektronischen Weiterverarbeitung bereit stellt.

Der Strömungssensor 4 ist mit einem Gewindeflansch 9 in die Druckmittelbohrung 3 eingeschraubt, wodurch es möglich ist, auch bereits vorhandene Druckmittelbohrungen 3 mit einem solchen Strömungssensor 4 nachzurüsten, in dem lediglich eine an den Strömungssensor 4 angepasste Bohrung mit Gewinde eingebracht werden muss.

Der Staukörper 5 ist unmittelbar in der Druckmittelbohrung 3 geführt und liegt in Ruhelage der Stirnfläche des Gewindeflansches 9 an. Ebenso besteht jedoch auch die Zeichnung nicht näher dargestellte Möglichkeit, dass der Staukörper 5 in einer an den Gewindeflansch 9 anschließenden Hülse geführt ist, wobei die Hülse entweder innerhalb oder außerhalb des Plattenrahmens 1 angeordnet ist. Bei einer Anordnung außerhalb des Plattenrahmens 1 ist die Anbringung eines Leckagemelders selbst dann möglich, wenn aufbaubedingt im Plattenrahmen 1 kein ausreichender Platz zur Verfügung steht.

Wie sich weiter der Figur 1 entnehmen lässt, ist der Staukörper 5 mittels einer in der Hülse oder der Druckmittelbohrung 3 geführten Schraubenfeder 10 in der Ruhelage, also in stirnseitiger Anlage am Gewindeflansch 9, gehalten. Auf der dem Staukörper 5 abgewandten Seite dagegen stützt sich die Schraubenfeder 10 an einer Ringschulter 11 der Druckmittelbohrung 3 - oder der Hülse - ab.

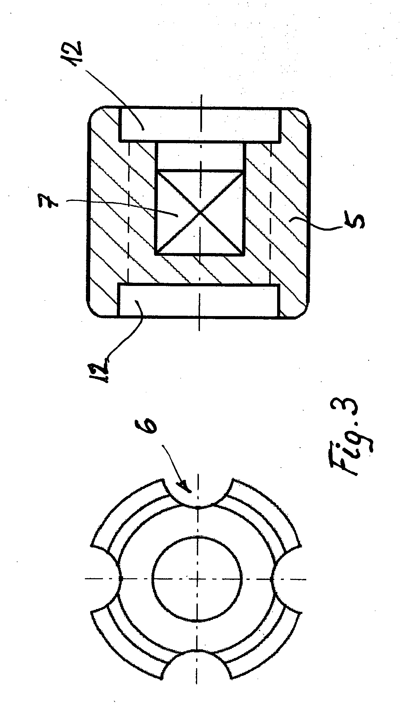

Wie sich der Figur 3 entnehmen lässt, ist der Staukörper 5 an beiden Stirnseiten mit einer flachen Sacklochbohrung 12 versehen, die jeweils zu den einzelnen Strömungskanälen 6 hin offen ist.

Um Schmutzablagerungen im Bereich der Strömungskanäle 6 zu vermeiden, besitzen diese, wie auch aus Figur 3 ersichtlich, eine kreisförmige Randkontur.

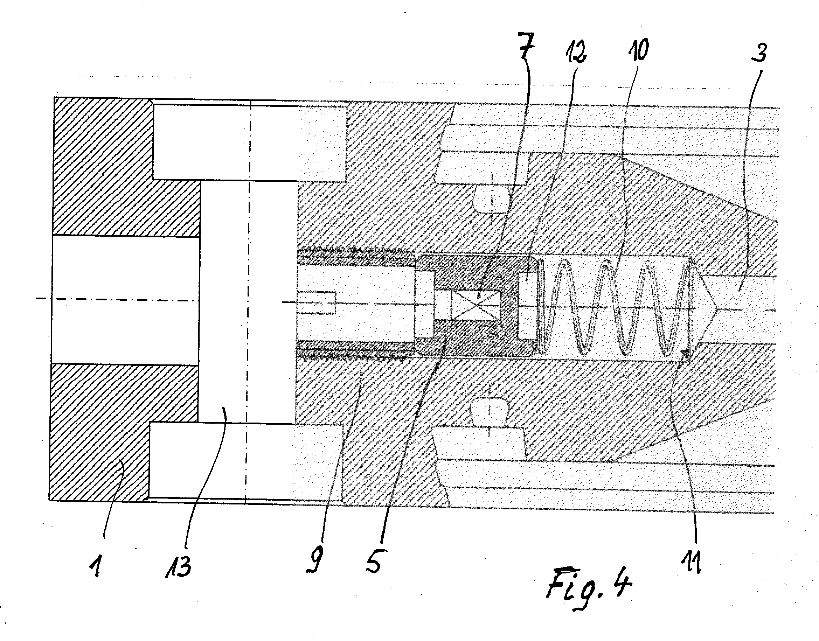

In der Fig. 4 ist eine weitere Ausführungsvariante dargestellt, bei welcher die einzelnen Leckagemelder über eine quer im Plattenrahmen 1 sich erstreckende Bohrung 13 miteinander verbunden sind, wodurch nicht jedes Membranfilterelement einzeln mit Druckmittel angesteuert werden muß.

Im übrigen besteht grundsätzlich auch die Möglichkeit, den Leckagemelder nicht in die Filterplatte einzubauen, sondern in der Zuleitung anzuordnen.

## Patentansprüche

1. Leckagemelder für Filterelemente einer Filterpresse, die mehrere randseitig zusammengespannte, aus einer Stützwand mit einem umlaufenden Plattenrahmen (1) bestehende Filterelemente umfasst, die zwischen sich Filterkammern mit darin mündenden Einläufen für die zu filtrierende Suspension bilden und ein- oder beidseitig im Randbereich dicht mit dem Filterelement verbundene, durch ein Druckmittel in die Filterkammer vorbewegbare Preßmembranen tragen, wobei das Druckmittel über eine randseitig in dem Filterelement mündende Druckmittelbohrung (3) zu- bzw. abgeführt wird, in die ein vom Druckmittel durchflossener Strömungssensor einsetzbar ist, **dadurch gekennzeichnet, dass** der Strömungssensor (2) einen im Querschnitt im wesentlichen zylindrischen, axial verschiebbaren Staukörper (5) aufweist, der an seiner Mantelfläche mit wenigstens einem, bevorzugt zwei oder vielfachen hiervon sich in axialer Richtung erstreckenden Strömungskanälen (6) versehen ist, wobei der Staukörper (5) einen Magneten (7) aufweist, über dessen Magnetfeld die Position des Staukörpers (5) durch einen ebenfalls im Randbereich bzw. im Plattenrahmen (1) angeordneten Magnetsensor (8) erfasst und als Signal zur Weiterverarbeitung bereitgestellt wird.

2. Leckagemelder nach Anspruch 1, **dadurch gekennzeichnet, dass** der Strömungssensor (2) mit einem Gewindeflansch (9) in die Druckmittelbohrung (3) eingeschraubt ist.

3. Leckagemelder nach Anspruch 2, **dadurch gekennzeichnet, dass** der Staukörper (5) in einer an den Gewindeflansch (9) anschließenden Hülse geführt ist, wobei die Hülse entweder innerhalb oder außerhalb des Plattenrahmens (1) angeordnet ist.

4. Leckagemelder nach Anspruch 2, **dadurch gekennzeichnet, dass** der Staukörper (5) in der Druckmittelbohrung (3) geführt ist und in Ruhelage der Stirnfläche des Gewindeflansches (9) anliegt.

5. Leckagemelder nach einem der Ansprüche 2 bis 4, **dadurch gekennzeichnet, dass** der Staukörper (5) mittels einer in der Hülse oder der Druckmittelbohrung (3) geführten Schraubenfeder (10) in der Ruhelage gehalten ist, wobei die Schraubenfeder (10) sich auf der dem Staukörper (5) abgewandten Seite an einer Ringschulter (11) der Hülse oder der Druckmittelbohrung (3) abstützt.

6. Leckagemelder nach einem der Ansprüche 1 bis 5, **dadurch gekennzeichnet, dass** der Staukörper (5) an beiden Stirnseiten mit einer flachen Sacklochbohrung (12) versehen ist, die jeweils zu den einzelnen Strömungskanälen (6) hin offen ist.

7. Leckagemelder nach einem der Ansprüche 1 bis 6, **dadurch gekennzeichnet, dass** die Strömungskanäle (6) eine kreisförmige Randkontur aufweisen.

8. Leckagemelder nach einem der Ansprüche 1 bis 7, **dadurch gekennzeichnet, dass** der Staukörper (5) an seinen stirnseitigen Rändern mit einer Verrundung oder einer Fase versehen ist.

9. Leckagemelder nach einem der Ansprüche 1 bis 8, **dadurch gekennzeichnet, dass** der Magnetsensor (8) als digital arbeitendes Schaltelement oder als analog arbeitender linearer Sensor ausgebildet ist.

## Claims

1. A leakage detector for filter elements of a filter screen, comprising a plurality of filter elements consisting of a support wall with a circumferential plate frame (1), which elements are fastened together at the edges and form between them filter chambers with inlets flowing into same, which inlets are for the suspension to be filtered and bear impermeable membranes which can be moved forwards into the filter chamber by a means of pressure, and which membranes are tightly connected in the edge region, on one or both sides, to the filter element, wherein the means of pressure is supplied or discharged, via a bore (3) of the means of pressure, arranged on the edge and flowing into the filter element, into which bore a flow sensor, through which the means of pressure has flowed, can be inserted, **characterised in that** the flow sensor (2) has a damming body (5) which is substantially cylindrical in cross-section and axially displaceable, which body is provided on its generated surface with at least one, preferably two or multiples thereof, flow channels (6) extending away therefrom in axial direction, wherein the damming body (5) has a magnet (7), via the magnetic field of which the position of the damming body (5) is detected by a magnet sensor (8) also arranged in the edge region or in the plate frame (1), and is provided as a signal for further processing.

2. The leakage detector according to claim 1, **characterised in that** the flow sensor (2) is screwed into the bore (3) of the means of pressure with a screwed flange (9).

3. The leakage detector according to claim 2, **characterised in that** the damming body (5) is guided into a sleeve abutting against the screwed flange (9), wherein the sleeve is arranged either inside or outside the plate frame (1).

4. The leakage detector according to claim 2, **characterised in that** the damming body (5) is guided into the bore (3) of the means of pressure, and abuts against the end face of the screwed flange (9) when at rest.

5. The leakage detector according to one of claims 2 to 4, **characterised in that** the damming body (5) is held in the resting position by means of a compression spring (10) guided into the sleeve or the bore (3) of the means of pressure, wherein the compression spring (10) is braced on an annular collar (11) of the sleeve or the bore (3) of the means of pressure, on the side facing away from the damming body (5).

6. The leakage detector according to one of claims 1 to 5, **characterised in that** the damming body (5) is provided with a flat blind hole (12) on both end faces, each of which holes is open towards the individual flow channels (6).

7. The leakage detector according to one of claims 1 to 6, **characterised in that** the flow channels (6) have a circular edge contour.

8. The leakage detector according to one of claims 1 to 7, **characterised in that** the damming body (5) is provided with a rounding or a bevel at its end-face edges.

9. The leakage detector according to one of claims 1 to 8, **characterised in that** the magnet sensor (8) is designed as a digital circuit element or analogue linear sensor.

## Revendications

1. Détecteur de fuite pour des éléments filtrants d'un filtre-presse qui comprend plusieurs éléments filtrants, constitués d'une paroi d'appui avec un cadre à plaques périphérique (1) et assemblés par serrage au niveau de leurs bords, éléments filtrants, qui forment entre eux des chambres de filtration avec des entrées débouchant dans celles-ci pour la suspension à filtrer et qui portent au niveau de leurs bords, d'un côté ou des deux côtés, des membranes qui sont reliées de manière étanche à l'élément filtrant et peuvent être avancées dans la chambre de filtration par un milieu sous pression, le milieu sous pression étant introduit et évacué via un alésage de milieu sous pression (3) débouchant dans l'élément filtrant au niveau de son bord, alésage, dans lequel un capteur d'écoulement traversé par le milieu sous pression peut être inséré, **caractérisé en ce que** le capteur d'écoulement (2) présente un corps déflecteur (5) à section transversale essentiellement cylindrique et déplaçable axialement, qui est pourvu sur sa surface d'enveloppe d'au moins un, de préférence de deux ou de multiples canaux d'écoulement (6) s'étendant dans le sens axial, le corps déflecteur (5) présentant un aimant (7) par l'intermédiaire du champ magnétique duquel la position du corps déflecteur (5) est captée et mise à disposition sous la forme d'un signal pour un traitement ultérieur par un capteur magnétique disposé également au niveau du bord, c'est-à-dire dans le cadre à plaques (1).

2. Détecteur de fuite suivant la revendication 1, **caractérisé en ce que** le capteur d'écoulement (2) est vissé avec une bride filetée (9) dans l'alésage de milieu sous pression (3).

3. Détecteur de fuite suivant la revendication 2, **caractérisé en ce que** le corps déflecteur (5) est guidé dans un manchon raccordé à la bride filetée (9), le manchon étant disposé soit à l'intérieur, soit à l'extérieur du cadre à plaques (1).

4. Détecteur de fuite suivant la revendication 2, **caractérisé en ce que** le corps déflecteur (5) est guidé dans l'alésage de milieu sous pression (3) et s'appuie en position de repos sur la face frontale de la bride filetée (9).

5. Détecteur de fuite suivant une des revendications 2 à 4, **caractérisé en ce que** le corps déflecteur (5) est maintenu en position de repos par l'intermédiaire d'un ressort hélicoïdal (10) guidé dans le manchon ou dans l'alésage de milieu sous pression (3), le ressort hélicoïdal (10) s'appuyant, sur le côté opposé au corps déflecteur (5), sur un épaulement annulaire (11) du manchon ou de l'alésage de milieu sous pression (3).

6. Détecteur de fuite selon une des revendications 1 à 5, **caractérisé en ce que** le corps déflecteur (5) est pourvu sur ses deux faces frontales d'un alésage borgne plat (12) qui est respectivement ouvert envers les différents canaux d'écoulement (6).

7. Détecteur de fuite selon une des revendications 1 à 6, **caractérisé en ce que** les canaux d'écoulement (6) présentent un contour de bord circulaire.

8. Détecteur de fuite selon une des revendications 1 à 7, **caractérisé en ce que** le corps déflecteur (5) est pourvu d'un arrondi ou d'un chanfrein sur ses bords frontaux.

9. Détecteur de fuite selon une des revendications 1 à 8, **caractérisé en ce que** le capteur magnétique (8) est conçu comme élément de commutation fonctionnant en mode numérique ou comme capteur linéaire fonctionnant en mode analogique.
